# EUROPEAN PATENT APPLICATION

(11) **EP 2 578 086 A1**
(43) Date of publication of application: **10.04.2013**
(21) Application number: 12186232.0
(22) Date of filing: 27.09.2012
(51) Int. Cl.: A23G 9/12, B01F 7/26

(54) **Process for the production of ice-cream and machine for the production of ice-cream that implements said process**

(30) Priority: 04.10.2011 IT MI20111791
(71) Applicant: Bray Franco, 20147 Milano (IT)
(72) Inventor: Bray Franco, 20147 Milano (IT)
(74) Representative: Martegani, Franco

(57) **Abstract**

The present invention relates to a process for the production of ice-cream comprising the following consecutive phases:
i) mixing
ii) pasteurization
iii) homogenization
iv) cooling
v) aging

of an ice-cream-based mixture, wherein phases i) -v) are all effected in a single operative volume (V) of a swivel disk reactor (S.D.R) (1);
a further object of the present invention relates to a machine for the production of ice-cream that implements said process.

## Description

The present invention relates to a process for the production of ice-cream and a machine that implements said process.

Ice-cream is an extremely complex product, fruit of a delicate balance between its components.

Traditionally, the production process of ice-cream uses a plurality of machines such as mixers, pasteurizers, homogenizers, coolers and aging machines for the treatment of the liquid mixture which is then frozen in appropriate freezers.

More specifically, the steps of the method for the traditional production comprise:
i) Mixing
ii) Pasteurization
iii) Homogenization
iv) Cooling
v) Aging

Even if functional, the production of ice-cream, in the traditional sense, has various drawbacks.

First of all, an operator who intends to produce it must be equipped with the series of machines briefly indicated above: although machines are available on the market that combine various functions, there is in any case a significant number of machines necessary, with the disadvantage of costs and considerable encumbrance.

Secondly, the production in this type of machinery is effected for consecutive feeds (i.e. adopting the same English wording "batchwise"), with the result that the preparation times of this food are relatively lengthy and consequently the times of use and idle times of the machines must be suitably managed in order to improve the overall yield and reduce costs.

In 2009, an experiment was carried out by M. Aktar et al. as described in the International Journal of Food Science Technology n. 44 del 2009, for carrying out some of the production phases of ice-cream in a "Spinning Disc Reactor" (otherwise known as S.D.R.) normally used in the production field of medicines or in microscopy.

The description and disclosures deriving from this mainly relate to only one experimentation based, among other things, on the following steps:
i) Preparation of a liquid ice-cream-based mixture preheated to 70°C and mixed for 5 minutes in a suitable container;
ii) Introduction of the liquid ice-cream base into a S.D.R. reactor with continuity for 20 minutes at a flow-rate of 6 mL/s with the disc of the reactor rotating at a rate of 2,900 rpm and with a temperature of 85°C;
iii) Extraction of the mixture from the S.D.R. reactor and transfer to a freezer at -20°C for 2 minutes;
iv) Transfer of the mixture from the freezer to a refrigerator at a temperature of 4°C for its aging in a maximum time of 18 hours.

The liquid ice-cream-based mixture used for this production process comprised:
- Full-cream milk 34 %
- Double cream 13.6%
- Unsalted butter 2.04%
- Golden cane sugar 13.9%
- Low-fat milk in powder 7%
- Xanthan rubber 0.25%
- Lecithin mixture 0.45%
- Tap water 28.76%

This experiment produced an ice-cream that, compared to traditional ice-cream, is defined "just acceptable" and therefore not optimum.

Furthermore, in the production process used for the experiment, the approach is similar to that relating to the use of a plurality of machines (S.D.R. reactor, freezer, refrigerator) operating "batchwise", with the same drawbacks discussed above.

The objective of the present invention is to provide a process for the production of ice-cream that is capable of overcoming these drawbacks.

This objective is achieved by a process according to the first claim enclosed and having the advantageous characteristics of the enclosed dependent claims.

A further object of the present invention relates to a machine for the production of ice-cream that implements this method.

The functional characteristics of the invention, and its advantages with respect to the known art, will appear more evident from the following description, referring to the enclosed drawing, which shows a section of a S.D.R. reactor.

For a better understanding of the present invention, it would be convenient to briefly describe a S.D.R. reactor of the known type, in which the steps of the method of the present invention are effected.

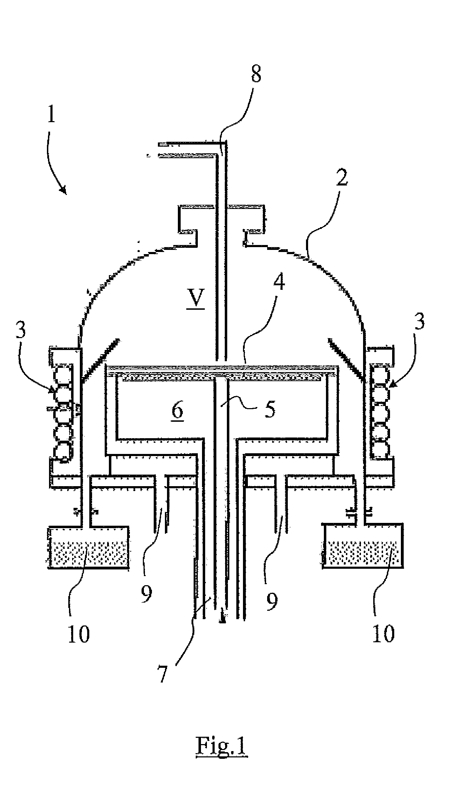

With reference to figure 1, a S.D.R. reactor is indicated therein with the general reference number 1, which comprises a bell 2, metal or glass, depending on the requirements, which defines a perimetric wall delimiting an operative volume V of the reactor 1.

The bell 2 is equipped with (or in contact with) heat exchangers 3, for example tube bundles in which a first thermovector fluid circulates.

A rotating disc 4 supported by a shaft 5 to which a motor is connected, for example an electric motor (not shown), is situated inside the operative volume V.

The temperature of the rotating disc 4 can be varied thanks to the underlying chamber 6 which is in fluid communication with a duct 7 concentric to the shaft 5 in which a second thermovector fluid passes, which reaches the same chamber 6, and which therefore acts as a heat exchanger of the disc 4 itself.

The disc 4 is preferably made of stainless steel, has a variable diameter, for example 30 cm, and has a variable rotation rate, for example ranging from 1,500 rpm to 3,000 rpm.

During the operating phases, the first and second thermovector fluid preferably have the same temperature, but there can also be cases in which they can have different temperatures.

The temperatures that can be reached inside the operative volume V preferably oscillate between -25°C and 250°C.

The feeding of a fluid into the volume V is effected through a feeding duct 8 that extends inside the volume V itself and terminates facing the upper (under assembled conditions) and free side of the disc 4.

The discharging of the fluid from the reactor 1 is effected through discharge ducts 9 situated on the wall of the floor of the volume V.

Finally, in the example shown, there are two analysis tanks 10, which are generally optional, and which are connected to the volume V in order to extract a quantity of processed product, during the functioning of the reactor 1.

The functioning principles of the reactor 1 are generally known: the creation of a strong acceleration field through the intensified rotation of the disc 4 causes the fluid introduced onto the surface of the disc 4 to flow as an intensely mixed phase in an extremely micro-fine form towards the internal walls defining the operative volume V of the reactor 1.

The whole operation takes place in the presence of an excellent heat and mass transmission also in the presence of significant viscosities of the product treated.

In the product treated, this technology allows the creation and control of the distribution of the microparticles formed.

The dynamic behaviour is characterized by phenomena created in the contact between the constituents of the machine (disc 4) and solids-fluids that occupy the volume V and is governed by the science that studies the technology of surfaces in movement between each other and the material, tribology.

The phenomena that take place in the interface between the surfaces in movement and the fluid mixture cause and influence the outcome of the process, they must therefore be known and taken into consideration together with all the elements forming the system to be treated, in order to optimize the result of their interactions.

The environmental aspects such as composition, temperature, viscosity, concentration of the ingredients of the mixture are consequently extremely important as also the operative parameters and geometry of the elements in movement such as the type of surface and design of the disc 4, rotation rate, flow values.

The ice-cream machine according to the present invention and in which at least part of the production method described hereunder is effected, comprises at least said reactor 1.

According to the process for the production of ice-cream in accordance with the present invention, the mixture can be produced in a single treatment using the reactor 1.

In particular, in the process according to the present invention, the mixing, pasteurization, homogenization, cooling and aging steps are all carried out by and in the reactor 1 and are followed by a freezing phase.

The process for the production of ice-cream according to the present invention comprises forming the ice-cream-based mixture obtained as follows:
- Full-cream milk 50-70%
- Low-fat milk in powder 4-8%
- Cream 15-25%
- Sugar 10-18%
- Carob flour 0.1-0.4%

The process for the production of ice-cream according to the present invention comprises the following steps:
a) heating said disk 4 to a temperature ranging from 70°C to 80°C;
b) introducing an ice-cream-based mixture preferably produced according to what is indicated above, into the volume V;
c) actuating the rotation of the disk until a rate substantially equal to 2,800-3,000 rpm is gradually reached;
d) maintaining the mixture in said operative volume V until a temperature ranging from 70°C to 80°C is reached;
e) decreasing the temperature of the disk 4 to a value of about 4°C;
f) maintaining the mixture in said volume V for a period of time ranging from 10 to 15 minutes.

In this way, the Applicant has observed that both the mixing, pasteurization, homogenization, and subsequent cooling and aging of the mixture are obtained, thus avoiding the drawbacks of the state of the art.

In particular, the hydration of the proteins present in the ice-cream base through this process is intensified and free of flocculation.

In obtaining these physical distribution conditions of the two main components of the mixture, fat and proteins, an ideal situation is created for an improved emulsifiability between the two fundamental ingredients.

For this purpose, it should be noted that the ice-cream-based mixture has no emulsifiers, which, on the other contrary, are present in any mixture known in the state of the art, with relative advantages with respect to cost and naturalness of the product.

Furthermore, the absence of an emulsifier prevents a drawback known in the state of the art, as this tends to be concentrated in the interface itself between the fat and plasma.

With the reactor 1 and process according to the invention, on the other hand, it is believed that the natural proteins of milk, lecithin, phospholipids and fat, all distributed in regular form in terms of volume and particle-size, are in an optimum environment for favouring the formation of an extremely stable natural emulsion, thus avoiding the use of emulsifiers and the relative drawbacks.

It should be noted that the production time, using the process of the present invention, is short, 20 minutes are in fact sufficient for pasteurizing, homogenizing, cooling and aging two litres of mixture.

When the treatment phase described has been completed, the mixture is transferred by pumping directly into a freezer where the final continuous production of ice-cream takes place.

It should be noted that in ice-cream, it is of interest to produce particles with reduced dimensions within a structure where the same have a homogeneous distribution in relation to their dimensions.

In this sense, the reactor 1 produces particles having a micro-dimension of the solutes (proteins) and suspensions (fats), ranging from 300 to 600 µm in relation to the parameters (rotation rate, flow-rate, temperature, viscosity).

The final ice-cream, produced with this process, proves to be an extremely smooth product due to the friction with the disc which optimizes the diffusion and dissolution of the components and in particular as a result of the reduced dimensions of the globules of fat present in the milk and those added and a consequent formation of a stable emulsion, with the result of allowing an end-product with a creamy structure to be obtained, with a reduced cold sensation at the moment of consumption.

This substantial excellent physical structure provides an end-product having a greater stability to the air naturally englobed and a greater melting resistance.

In addition to these qualitative advantages of the end-product, including the possibility of avoiding the addition of an emulsifier, the present invention allows a considerable reduction in the process plants and relative spaces installed and therefore a consequent reduced investment cost and possible limited energy consumption.

The objectives mentioned in the preamble of the description have therefore been achieved.

Finally, according to the invention, a process intensification concept is applied. This is applied for reducing the investment costs, using compact plants that exert various process functions in continuous, improving the quality of the end-products, the intrinsic safety, but above all, energy efficiency.

The purpose of process intensification (PI) is to obtain greater efficiency and flexibility in extremely reduced reaction and process times with respect to traditional processes. The reactor used allows, among other things, a high transfer rate of heat and treated mass to be obtained, in a closed environment ideal for optimizing hygiene and safety conditions.

The scope of the invention is defined by the following claims.

## Claims

1. A process for the production of ice-cream comprising the following consecutive phases:
i) mixing
ii) pasteurization
iii) homogenization
iv) cooling
v) aging
of an ice-cream-based mixture, **characterized in that** said phases i)-v) are all effected in a single operative volume (V) of a swivel disk reactor (S.D.R) (1).

2. The process according to claim 1, **characterized in that** it comprises a freezing phase of said ice-cream-based mixture, effected after said step v).

3. The process according to claim 1 or 2, **characterized in that** it comprises a step for producing said ice-cream-based mixture which comprises the following components, substantially in the following percentages:
- full-cream milk 50-70%
- low-fat milk in powder 4-8%
- cream 15-25%
- sugar 10-18%
- carob flour 0.1-0.4%

4. The process according to any of the previous claims effected in a S.D.R. reactor (1) of the type equipped with at least one bell (2) which delimits an operative volume (V) in which a rotating disk (4) is positioned, **characterized in that** it comprises the following passages:
a- heating said disk (4) to a temperature ranging from 70°C to 80°C
b- introducing an ice-cream-based mixture preferably produced according to what is indicated above, into said volume (V)
c- actuating the rotation of the disk (4) until a rate substantially equal to 2,800-3,000 rpm is gradually reached.
d- maintaining the mixture in said operative volume (V) until a temperature ranging from 70°C to 80°C is reached
e- decreasing the temperature of the disk (4) to a value of about 4°C
f- maintaining the mixture in said volume (V) for a period of time ranging from 10 to 15 minutes.

5. The process according to any of the previous claims, wherein said ice-cream-based mixture has no emulsifiers.

6. A machine for the production of ice-cream **characterized in that** implements the process according to one or more of the previous claims.

7. The machine for the production of ice-cream according to claim 6, **characterized in that** it comprises a S.D.R. reactor (1) of the type equipped with at least one bell (2) which delimits an operative space (V) wherein a rotating disk (4) is positioned and in which said operative space (V) can be heated/cooled by means of at least one heat exchanger associated with the wall of said bell (2).

8. The machine for the production of ice-cream according to claim 6 or 7, **characterized in that** said rotating disk (4) comprises a heat exchanger.
